(19) Europäisches Patentamt
European Patent Office
Office européen des brevets

(11) **EP 2 695 226 B1**

(12) **FASCICULE DE BREVET EUROPEEN**

(45) Date de publication et mention
de la délivrance du brevet:
**20.07.2016 Bulletin 2016/29**

(21) Numéro de dépôt: **12718290.5**

(22) Date de dépôt: **03.04.2012**

(51) Int Cl.:
*H01M 4/13* *(2010.01)*    *H01M 4/74* *(2006.01)*
*H01M 10/0525* *(2010.01)*    *H01M 4/04* *(2006.01)*
*H01M 4/66* *(2006.01)*    *H01M 10/44* *(2006.01)*
*H01M 4/02* *(2006.01)*

(86) Numéro de dépôt international:
**PCT/FR2012/050718**

(87) Numéro de publication internationale:
**WO 2012/136926 (11.10.2012 Gazette 2012/41)**

(54) **PRÉCURSEUR D'ACCUMULATEUR LITHIUM-ION À ÉLECTRODE SACRIFICIELLE DE LITHIUM ET ÉLECTRODE TEXTILE NÉGATIVE À CONVERSION**

**LITHIUMIONENBATTERIEVORLÄUFER MIT EINER OPFERLITHIUMELEKTRODE UND NEGATIVEN TEXTILEN WANDLERELEKTRODE**

**LITHIUM-ION BATTERY PRECURSOR INCLUDING A SACRIFICIAL LITHIUM ELECTRODE AND A NEGATIVE TEXTILE CONVERSION ELECTRODE**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.04.2011 FR 1152974**

(43) Date de publication de la demande:
**12.02.2014 Bulletin 2014/07**

(73) Titulaire: **Electricité de France**
**75008 Paris (FR)**

(72) Inventeurs:
• **VIDAL, Elodie**
**F-77690 Montigny sur Loing (FR)**
• **LASCAUD, Stéphane**
**F-77300 Fontainebleau (FR)**

(74) Mandataire: **Cabinet Plasseraud**
**66, rue de la Chaussée d'Antin**
**75440 Paris Cedex 09 (FR)**

(56) Documents cités:
**FR-A1- 2 901 641    US-A- 5 601 951**

**Description**

L'invention concerne un précurseur d'un accumulateur lithium-ion contenant une électrode sacrificielle de lithium métallique, ainsi qu'un procédé de fabrication d'un accumulateur lithium-ion à partir d'un tel précurseur.

La terminologie « lithium-ion » (Li-ion) définit généralement une technologie dans laquelle la cathode comprend un matériau d'insertion comprenant du lithium, l'anode comprend au moins un matériau réagissant électrochimiquement de façon réversible avec le lithium, et l'électrolyte contient des ions lithium. Le matériau réagissant électrochimiquement de façon réversible avec le lithium est par exemple un matériau d'insertion, contenant ou non du lithium, ou du carbone. L'électrolyte contient généralement des sels fluorés de lithium en solution dans un solvant organique aprotique.

La demande de brevet français FR 2 870 639 au nom de la Demanderesse décrit une électrode pour accumulateurs lithium-ion caractérisée par la présence, à la surface du collecteur d'électrons, d'une couche de matière électrochimiquement active « nanostructurée » contenant des nanoparticules constituées d'un composé, par exemple d'un oxyde, du métal ou des métaux formant le collecteur d'électrons. La structure particulière de la matière électrochimiquement active permet d'améliorer les performances des accumulateurs en termes de puissance et de densité d'énergie massique.

La demande de brevet française FR 2 901 641, également au nom de la Demanderesse, décrit un perfectionnement de l'électrode nanostructurée ci-dessus, résidant principalement dans la structure textile de l'électrode et des demi-accumulateurs (électrode + séparateur) fabriqués à partir de celle-ci.

Lorsqu'on utilise pour la fabrication de batteries lithium-ion contenant de telles électrodes nanostructurées, comme seule source de lithium l'électrode positive généralement formée par un matériau composite à base d'oxydes lithiés, on se trouve confronté au problème suivant :

Au cours de la première charge de la batterie, la réaction électrochimique impliquant les ions lithium fournis par l'électrode positive et aboutissant, de façon souhaitée, à la formation de la couche de conversion nanostructurée à la surface de l'électrode négative, s'avère partiellement irréversible. Cette irréversibilité se traduit par la fixation définitive d'une partie des ions lithium dans la couche de conversion de l'électrode négative.

De plus, au cours de la première décharge de la batterie, il peut être souhaitable de limiter la quantité d'ions lithium extraits de la couche de conversion nanostructurée pour préserver la durée de vie de celle-ci.

Une partie des ions lithium initialement introduits n'étant alors plus disponibles pour les cycles de charge/décharge, il en résulte une réduction de la capacité de l'accumulateur. Or, l'électrode positive qui est la source initiale d'ions lithium, est dimensionnée en masse et en volume de façon à ce que la quantité d'ions lithium qu'elle peut fournir permette la conversion complète de l'électrode négative. La réduction de capacité se traduit donc par une sous-utilisation de l'électrode positive lors du cyclage de la batterie, à partir du deuxième cycle. Autrement dit, la réduction de capacité conduit, de façon indésirable, à un surdimensionnement de l'électrode positive, à un surcoût et à un excès de masse des éléments constitutifs de l'électrode positive.

L'idée à la base de la présente invention était de compenser les ions lithium irréversiblement et/ou volontairement immobilisés dans l'électrode négative par un apport d'ions lithium à partir d'une électrode sacrificielle.

L'utilisation d'électrodes sacrificielles de lithium pour la fabrication d'accumulateurs est déjà connue.

Ainsi, le brevet US 5 871 863, par exemple, divulgue l'utilisation d'une électrode sacrificielle de lithium en vue d'accroître la capacité massique et volumique d'électrodes positives à base d'oxyde de manganèse lithié ($LiMn_2O_4$), ce matériau ayant une capacité volumique inférieure de 10 à 20% à celle du matériau $LiCoO_2$ présenté comme matériau de référence. Un feuillard de lithium ou d'alliage de lithium sacrificiel est mis en contact direct ou indirect avec l'électrode positive constituée d'oxyde de manganèse lithié. Dans un mode de réalisation, un conducteur électronique est intercalé entre le feuillard de lithium et l'électrode positive afin de limiter le caractère exothermique de la réaction d'autodécharge entre ces deux éléments en présence d'une solution d'électrolyte. Cette réaction d'auto-décharge conduit à l'insertion d'une quantité d'ions lithium supplémentaire dans le matériau d'électrode positive. Compte-tenu de la structure en feuilles des électrodes et de l'accumulateur, il est nécessaire, pour garantir une répartition uniforme des ions lithium, d'appliquer le feuillard sur l'ensemble de la surface de l'électrode positive, autrement dit, le rapport de la surface géométrique du feuillard de lithium à la surface géométrique cumulée des électrodes positives ne devrait pas être trop faible et tendre idéalement vers 1 (lorsque toute la surface des électrodes positives est couverte du feuillard de lithium). L'épaisseur du feuillard utilisé dans l'exemple de US 5 871 863 est de 30 μm.

La Demanderesse, dans le cadre de ses recherches visant à perfectionner les accumulateurs lithium-ion comportant des électrodes nanostructurées telles que décrites dans FR 2 901 641, a découvert que, grâce à la structure textile des électrodes négatives et grâce à un agencement particulier des différents composants de l'accumulateur, il était possible d'utiliser du lithium métallique en tant que source de lithium pour compenser la réduction de capacité constatée ou souhaitée à la fin du premier cycle de charge-décharge, et ceci de façon beaucoup plus simple que dans le brevet US 5 871 863 discuté ci-dessus.

En effet, dans le précurseur d'accumulateur de la présente invention, décrit en détail ci-après, on met à profit le fait que la structure textile des électrodes négatives nanostructurées, même lorsque celles-ci sont empilées les unes sur les autres ou enroulées sur elles-mêmes, permet le passage d'ions lithium dans toutes les directions, et notamment dans un sens perpendiculaire au plan des électrodes textiles. Il en résulte une diffusion régulière des ions lithium dans l'ensemble de l'accumulateur et/ou précurseur d'accumulateur.

Dans la présente invention il n'est ainsi pas nécessaire d'appliquer un feuillard de lithium sur chacune des électrodes réceptrices de lithium (comme dans US 5 871 863), mais un seul feuillard de lithium, ou un nombre peu élevé de feuillards, d'épaisseur relativement plus importante, suffit pour introduire la quantité de lithium souhaitée de façon régulière dans l'ensemble des électrodes négatives réceptrices des ions lithium.

La présente invention a par conséquent pour objet un précurseur d'accumulateur lithium-ion comportant à la fois une ou plusieurs électrodes textiles nanostructurées superposées et au moins une électrode de lithium sacrificielle, c'est-à-dire une électrode en lithium ou alliage de lithium qui sera partiellement ou totalement consommée au cours de la préparation de l'accumulateur définitif (première charge) à partir du précurseur d'accumulateur.

Le précurseur d'accumulateur de la présente invention comprend

- un ou plusieurs modules d'électrodes formés chacun par

   (a) au moins un précurseur d'électrode négative textile, constitué d'une structure métallique textile, oxydée en surface, à base d'un ou de plusieurs métaux de transition des groupes 4 à 12 de la Classification Périodique des Eléments,
   (b) un séparateur polymérique, imprégné d'une solution d'un sel de lithium dans un solvant organique aprotique, ledit séparateur recouvrant la totalité de la surface du précurseur d'électrode négative textile (a),
   (c) une électrode positive formant une matrice solide, de préférence continue, dans laquelle est enfermée la structure formée par (a) et (b), et

- au moins une électrode de lithium métallique, formée de préférence par un feuillard de lithium métallique supporté par un conducteur électrique, séparée du ou des modules d'électrodes par un séparateur polymérique imprégné d'une solution d'un sel de lithium dans un solvant organique aprotique,

le rapport de la surface géométrique du feuillard de lithium à la surface géométrique cumulée de l'ensemble des précurseurs d'électrodes négatives textiles étant compris dans la fourchette allant de 0,05 à 0,33, de préférence de 0,1 à 0,25.

Le précurseur d'accumulateur de la présente invention contient ainsi un ou plusieurs « modules d'électrodes » constitués chacun d'une électrode positive formant une matrice, de préférence continue, dans laquelle est enfermé un précurseur d'électrode négative textile ou un empilement de plusieurs précurseurs d'électrode négative textile, un séparateur polymérique imprégné d'un électrolyte liquide enrobant les fibres du précurseur d'électrode négative et l'isolant ainsi totalement de l'électrode positive.

L'électrode positive est formée d'un matériau d'insertion d'ions lithium couramment utilisé dans les accumulateurs lithium-ion. De tels matériaux sont connus par l'homme du métier. On peut citer à titre d'exemples de tels matériaux par exemple au moins un matériau choisi dans le groupe formé par $LiCoO_2$, $LiNi_xCo_yMn_zO_2$ où x>0, y>0, z>0, avec x+y+z=1, $LiNi_xMn_{1-x}O_2$ où $1 \geq x > 0$, $LiNi_xCo_yAl_zO_2$ où x>0, y>0, z>0 avec x+y+z=1, $LiFePO_4$ ou $LiMn_2O_4$, ou un composé de type $LiMX_2$ où M est un métal de transition et X représente un atome d'halogène. L'électrode positive comprend en outre avantageusement un liant polymère, de préférence du poly(fluorure de vinylidène) (PVDF) ou un copolymère de fluorure de vinylidène et d'hexafluoropropylène (PVDF-HFP), et du carbone.

Chaque précurseur d'électrode négative comprend

- un collecteur d'électrons contenant un ou plusieurs métaux de transition des groupes 4 à 12 de la Classification Périodique des Eléments, et
- à la surface du collecteur d'électrons, une couche d'oxyde formée par oxydation du collecteur d'électrons.

Lors de la préparation de l'accumulateur à partir du précurseur d'accumulateur de la présente invention, la couche d'oxyde d'au moins un métal de transition à la surface du collecteur d'électrons, réagira avec les ions lithium provenant de l'électrode de lithium sacrificielle et de l'électrode positive pour former une couche de conversion nanostructurée. Cette couche de conversion nanostructurée, décrite en détail dans les demandes FR 2 870 639 et FR 2 901 641, constitue la matière électrochimiquement active de l'électrode négative de l'accumulateur lithium-ion. Elle contient des nanoparticules ayant un diamètre moyen compris entre 1 et 1000 nm, de préférence entre 10 et 300 nm, ou des agglomérats de telles nanoparticules.

Le ou les métaux de transition du collecteur d'électrons sont de préférence choisis dans le groupe formé par le nickel, le cobalt, le manganèse, le cuivre, le chrome et le fer, le fer étant particulièrement préféré.

Dans un mode de réalisation particulièrement préféré, le précurseur d'électrode négative textile est en acier non allié ou faiblement allié, oxydé en surface.

Le précurseur d'électrode négative et l'électrode négative ont une structure textile, autrement dit une structure composée d'une multitude de fibres juxtaposées et/ou entremêlées, de façon ordonnée ou désordonnée. Il peut s'agir notamment d'une structure textile tissée ou d'une structure textile non-tissée.

La structure textile utilisée pour former le précurseur d'électrode négative est de préférence formée de fils très fins, peu espacés les uns des autres. En effet, plus les fils sont fins et plus le nombre de fils par unité de surface est important, plus la surface spécifique (déterminée par BET ou par spectroscopie d'impédance électrochimique) est élevée. La finesse des fils peut toutefois être limitée par l'aptitude au tréfilage des métaux ou alliages métalliques utilisés. Alors que certains métaux et alliages tels que le cuivre, l'aluminium, le bronze, le laiton et certains aciers alliés au chrome et au nickel se prêtent très bien au tréfilage et peuvent ainsi être obtenus sous forme de fils très fins, d'autres métaux ou alliages tels que les aciers ordinaires sont plus difficiles à tréfiler et conviennent mieux pour des structures à fibres courtes, telles que les non-tissés.

De manière générale, le diamètre équivalent de la section des fils ou fibres métalliques composant le précurseur d'électrode négative est compris entre 5 $\mu$m et 1 mm, de préférence entre 10 $\mu$m et 100 $\mu$m et en particulier entre 15 $\mu$m et 50 $\mu$m. On entend par « diamètre équivalent » le diamètre du cercle possédant la même surface que la section des fils ou fibres.

Dans l'électrode négative, la couche de conversion (matière électrochimiquement active) recouvre de préférence entièrement la surface du collecteur d'électrons et a de préférence une épaisseur comprise entre 30 nm et 15000 nm, en particulier entre 30 nm et 12000 nm.

Le précurseur de l'électrode négative textile a de préférence une structure non tissée, formée de fibres courtes ayant de préférence une longueur moyenne comprise entre 1 cm et 50 cm, de préférence entre 2 cm et 20 cm, et un diamètre équivalent entre 5 $\mu$m et 50 $\mu$m.

La Demanderesse utilise de préférence des feutres en laine d'acier disponibles dans le commerce. Ces feutres ont de préférence une masse volumique comprise entre 0,05 et 5 g/cm$^3$, en particulier entre 1 et 3 g/cm$^3$, ces valeurs étant celles déterminées sur un feutre comprimé par application d'une pression de 1 bar.

Le précurseur d'électrode négative, du fait de sa structure textile, est perméable aux ions, et en particulier aux ions lithium provenant de l'électrode sacrificielle. Lorsque cette structure textile est très dense, il peut être souhaitable d'augmenter cette perméabilité ou « porosité » en perçant la structure textile de trous ou ouvertures qui sont de préférence répartis régulièrement sur toute la surface de la structure textile. Ces trous s'ajoutent alors à ceux naturellement présents dans la structure textile. Lorsque, dans la présente demande, on mentionne les « trous » ou « ouvertures » du précurseur de l'électrode textile négative, ce terme englobe toujours les ouvertures intrinsèques à la structure textile et celles éventuellement créées par exemple par perçage de la structure textile.

Le précurseur d'électrode négative est couvert, sur toute sa surface, d'un revêtement polymérique assurant la fonction de séparateur. Dans le précurseur d'accumulateur de la présente invention, ce revêtement polymérique est imprégné et gonflé par un électrolyte liquide aprotique contenant au moins un sel de lithium. Dans la présente invention le revêtement de séparateur gonflé par l'électrolyte liquide a de préférence une épaisseur suffisamment faible pour que la structure textile du précurseur d'électrode négative soit toujours apparente. Autrement dit, le dépôt du séparateur n'obture de préférence pas entièrement, les ouvertures, trous ou mailles de la structure textile, que celle-ci soit tissée ou non-tissée.

La non-obturation de ces trous par le séparateur n'est toutefois pas une caractéristique technique essentielle de l'invention et la présente invention fonctionnera également lorsque le séparateur polymérique obture totalement les ouvertures de l'électrode textile. En effet, le séparateur imprégné d'une solution d'un sel de lithium est perméable aux ions lithium provenant de l'électrode sacrificielle et laissera donc passer ces ions lors du premier cyclage.

L'éventuel vide du précurseur d'électrode négative recouvert du séparateur sera comblé ensuite par le matériau de l'électrode positive, l'ensemble formé par le précurseur d'électrode négative, le séparateur imprégné de l'électrolyte liquide et l'électrode positive formant un module d'électrodes. On peut ainsi définir un taux de vide du précurseur d'électrode négative recouvert du séparateur qui est égal au volume de l'électrode positive de chaque module d'électrodes rapporté au volume total dudit module d'électrodes. Ce taux de vide est de préférence compris entre 20 et 90 %, de préférence entre 25 et 75 % et en particulier entre 50 et 70 %.

L'épaisseur de chaque module d'électrodes peut varier très largement en fonction du nombre d'électrodes textiles superposées les unes sur les autres. Elle est comprise généralement entre 100 $\mu$m et 5 cm, de préférence entre 150 $\mu$m et 1 cm et en particulier entre 200 $\mu$m et 0,5 cm.

Bien que le dépôt d'un revêtement mince de séparateur sur le précurseur d'électrode négative textile puisse se faire par différentes méthodes appropriées, telles que l'immersion, la pulvérisation ou le dépôt chimique en phase vapeur, le dépôt de ce revêtement se fait de préférence par voie électrochimique et en particulier selon une technique connue sous le nom de cataphorèse. Cette technique où la structure métallique à revêtir est introduite, en tant que cathode, dans une solution aqueuse contenant les composants de base du revêtement à déposer, permet en effet un dépôt extrêmement fin, régulier et continu, couvrant la totalité de la surface d'une structure, même de géométrie très complexe. Pour pouvoir migrer vers la cathode, c'est-à-dire vers la structure textile, le composant à déposer doit avoir une charge positive. Il est connu par exemple d'utiliser des monomères cationiques qui, après dépôt sur la cathode et polymérisation, forment un revêtement polymère insoluble.

Dans un mode de réalisation préféré du précurseur d'accumulateur de la présente invention, le séparateur est un séparateur déposé par cataphorèse à partir d'une solution aqueuse contenant de tels monomères cationiques, de préférence des monomères cationiques comportant des fonctions ammonium quaternaire. Le séparateur est par conséquent de préférence un revêtement polymérique formé par un polymère contenant des fonctions ammonium quaternaire.

Les sels de lithium incorporés dans les électrolytes liquides, utilisables dans les accumulateurs lithium-ion, sont connus de l'homme du métier. Il s'agit généralement de sels de lithium fluorés. On peut citer à titre d'exemple $LiCF_3SO_3$, $LiClO_4$, $LiN(C_2F_5SO_2)_2$, $LiN(CF_3SO_2)_2$, $LiAsF_6$, $LiSbF_6$, $LiPF_6$ et $LiBF_4$. De préférence ledit sel est choisi dans le groupe formé par $LiCF_3SO_3$, $LiClO_4$, $LiPF_6$, et $LiBF_4$.

En général, ledit sel est dissous dans un solvant organique aprotique anhydre constitué généralement de mélanges en proportions variables de carbonate de propylène, de carbonate de diméthyle et de carbonate d'éthylène. Ainsi, ledit électrolyte comprend généralement, comme il est connu de l'homme du métier, au moins un carbonate cyclique ou acyclique, de préférence cyclique. Par exemple, ledit électrolyte est du LP30, composé commercial de la société Merck contenant du carbonate d'éthylène (EC), du carbonate de diméthyle (DMC) et du $LiPF_6$, la solution contenant une mole/litre de sel et des quantités identiques de chacun des deux solvants.

Comme expliqué ci-devant, le précurseur d'accumulateur de la présente invention contient en outre au moins une électrode « sacrificielle » de lithium métallique. Cette électrode est appelée ainsi parce que, lors du premier cyclage (charge/décharge) au cours duquel le précurseur d'accumulateur de la présente invention est converti en accumulateur lithium-ion, cette électrode est partiellement ou totalement consommée. Cette électrode sacrificielle est de préférence formée par un feuillard de lithium métallique supporté par un conducteur électrique. Ce conducteur électrique est par exemple une plaque de cuivre et joue le rôle de collecteur d'électrons de l'électrode de lithium.

Le précurseur d'accumulateur de la présente invention présente l'avantage de pouvoir fonctionner avec des feuillards commerciaux ayant des épaisseurs standards comprises entre 50 µm et 150 µm. Grâce à la libre diffusion des ions lithium à travers les précurseurs d'électrode négative textile, un seul feuillard suffisamment épais, ou deux feuillards prenant en sandwich un ou plusieurs modules d'électrodes, permettent d'approvisionner l'ensemble des précurseurs d'électrodes négatives avec une quantité suffisante d'ions lithium.

Le rapport de la surface géométrique cumulée du ou des feuillards de lithium à la surface géométrique cumulée de l'ensemble des précurseurs d'électrodes négatives textiles est compris dans la fourchette allant de 0,05 à 0,33, de préférence de 0,1 à 0,25. En d'autres termes, on utilisera de préférence pour un feuillard de lithium 3 à 20 électrodes textiles négatives, de préférence 4 à 10 électrodes négatives, d'une surface géométrique identique à celle du feuillard de lithium.

Dans le cas de modules d'électrodes enroulés, l'électrode sacrificielle de lithium peut entourer la structure enroulée et/ou se trouver au centre de celle-ci.

Ce qui suit est un exemple de calcul des dimensions de l'électrode sacrificielle nécessaire pour fournir la quantité de lithium appropriée :

Ce calcul est fait pour un précurseur d'accumulateur de 10Ah constitué d'un empilement de 2 modules d'électrodes de 5Ah, module étant composé :

(a) de 5 précurseurs d'électrode négative textile ;
(b) d'un séparateur polymérique recouvrant la totalité de la surface des précurseurs d'électrode négative textile ; et
(c) d'une électrode positive à base de $LiFePO_4$, dont la capacité massique est de 160 mAh/g, d'un polymère liant et de carbone, formant une matrice solide d'une densité de 2,6 g/cm$^3$ (après imprégnation par l'électrolyte), d'une capacité volumique de 323 mAh/cm$^3$ et remplissant le volume libre à l'intérieur des 5 précurseurs d'électrode négative (a) avec leur séparateur (b).

Chaque précurseur d'électrode négative a une densité apparente de 2,2 g/cm$^3$, un taux de vide de 70%, une épaisseur de 152 µm. Il possède une couche de conversion constituée de magnétite ($Fe_3O_4$) de grammage 5mg par cm$^2$ de surface géométrique. Sa capacité massique lors du cyclage est de 500mAh/g de magnétite et la capacité nécessaire pour former la couche de conversion nanostructurée est de 924mAh/g. Chaque précurseur d'électrode négative est revêtu d'une couche de séparateur de 5µm d'épaisseur. L'ensemble précurseur d'électrode négative avec son séparateur ((a)+(b)) a donc une épaisseur de 152 µm + 2*5 µm = 162µm et un taux de vide de 48%.

Chaque module comprenant 5 électrodes négatives textiles aura, lors du cyclage, une capacité de 5 * 5mg/cm$^2$*500mAh/g = 12,5mAh/cm$^2$. L'épaisseur d'un module d'électrodes négatives textiles avec leur séparateur est de 5 x 162µm = 810µm. Le volume occupé par un module, c'est à dire par les 5 précurseurs d'électrodes négatives textiles avec leur séparateur, est de

$$\frac{5000mAh}{12,5mAh/cm^2} * 810.10^{-4}\,cm = 32,4cm^3\ .$$

Le taux de vide de l'ensemble précurseur d'électrode négative avec son séparateur ((a)+(b)) étant de 48%, le volume libre à l'intérieur du précurseur d'électrode négative textile avec son séparateur est de 32,4 cm$^3$ * 0,48 = 15,5 cm$^3$. La capacité de l'électrode positive occupant ce volume de 15,5cm$^3$ sera de 15,5 cm$^3$ x 323 mAh/cm$^3$ = 5 Ah. Cette capacité est la même que celle du module d'électrodes négatives textile qui lui est associé pour un fonctionnement harmonieux de l'accumulateur. Lors du premier cycle de charge/décharge, l'électrode négative textile va donc retenir

```
924mAh/g - 500mAh/g = 424mAh/g
```

de lithium au sein de sa couche de conversion soit

```
424mAh/g*5mg/cm²=2,12mAh/cm².
```

Or, pour fournir une capacité de 2,12mAh/cm$^2$, une électrode sacrificielle de lithium métallique suivant un processus d'oxydation électrochimique du lithium métallique en ions lithium doit avoir une épaisseur minimum de

$$\frac{2,12}{1000}\,Ah/cm^2 * \frac{1}{26,8Ah/mol} * 6,9\,g/mol * \frac{1}{0,54\,g/cm^3} = 1,01.10^{-3}\,cm = 10,1\mu m$$

Ainsi un précurseur d'accumulateur composé de deux modules d'électrodes, chacun composé de 5 précurseurs d'électrodes négatives textiles avec leur séparateur et dont le volume libre est rempli d'une électrode positive tel que décrit précédemment, nécessitera un feuillard de lithium dont l'épaisseur minimum sera de 10*10,1$\mu$m =101$\mu$m.

Par ailleurs, comme déjà mentionné en introduction, il pourra être intéressant de sur-dimensionner l'électrode sacrificielle de lithium de façon à ce qu'elle ne soit pas entièrement consommée lors de l'étape de conversion du précurseur d'accumulateur. Cette électrode de lithium résiduelle pourra en effet être avantageusement utilisée, en fin de vie de l'accumulateur, pour récupérer sous forme de lithium métallique le lithium incorporé dans les électrodes négatives et positives de l'accumulateur et donc en faciliter le recyclage. Le procédé de récupération du lithium comprend alors plusieurs étapes :

(1) une étape de recharge complète (i.e. une extraction complète des ions lithium) des électrodes négatives sur l'électrode sacrificielle,
(2) une étape de décharge complète (i.e. une extraction complète des ions lithium) des électrodes positives sur l'électrode sacrificielle
(3) une étape d'ouverture et d'évacuation de l'électrolyte, et
(4) une étape de récupération du lithium métallique soit par enlèvement mécanique, soit par fusion du lithium à une température supérieure à 180°C et récupération par coulée gravitée.

Le précurseur d'accumulateur de la présente invention comprend de préférence plusieurs modules d'électrodes de forme plane et de dimensions identiques superposés parallèlement les uns aux autres.

Deux modules d'électrodes sont de préférence séparés par un collecteur d'électrons, inséré entre eux, en contact électrique avec l'électrode positive (c). Afin de ne pas empêcher la libre diffusion des ions lithium provenant de l'électrode de lithium sacrificielle dans l'ensemble des modules d'électrodes, le collecteur d'électrons comporte un certain nombre d'ouvertures réparties de préférence uniformément sur toute sa surface. Le collecteur d'électrons de l'électrode positive est par exemple une grille métallique ou une structure textile métallique. Le collecteur d'électrons de l'électrode positive est de préférence constitué d'un métal choisi parmi le nickel, l'aluminium, le titane ou d'acier inoxydable. Dans un mode de réalisation préféré, le collecteur d'électrons est formé par une ou plusieurs grilles en aluminium disposées parallèlement au plan du ou des modules d'électrodes et intercalées entre ceux-ci.

Les vides ou ouvertures du collecteur d'électrons de l'électrode positive (c) sont remplis par le matériau de l'électrode positive, établissant ainsi une continuité de conduction ionique entre deux modules d'électrodes voisins.

Le feuillard de lithium métallique formant l'électrode sacrificielle est de préférence posé contre l'empilement de modules d'électrodes de manière à ce que le plan du feuillard soit parallèle au plan du ou des modules d'électrodes et donc parallèle au plan des électrodes négatives textiles. Comme déjà mentionné ci-dessus, le feuillard de lithium n'est pas en contact électrique avec l'électrode positive mais un séparateur à conduction ionique est inséré entre les deux.

Dans un mode de réalisation préféré, un feuillard de lithium, supporté par un collecteur d'électrons, est prévu de part et d'autre de l'empilement de modules d'électrodes. Le ou les feuillards de lithium couvrent de préférence la totalité d'une ou des deux faces principales de l'empilement.

Le précurseur d'accumulateur lithium-ion de la présente invention est converti en accumulateur par un procédé en deux étapes :

- une première étape de réduction électrochimique du (ou des) précurseur(s) d'électrode négative par l'électrode sacrificielle. Au cours de cette étape le feuillard de lithium métallique est consommé totalement ou partiellement et les ions lithium migrent à travers le séparateur de l'électrode sacrificielle, le matériau de l'électrode positive, le séparateur de l'électrode négative vers la couche d'oxyde du précurseur d'électrode négative avec laquelle ils réagissent, de manière partiellement irréversible pour former la couche de conversion nanostructurée qui constitue la matière active de l'électrode négative finale ;

- une deuxième étape de réduction électrochimique par l'électrode positive. Au cours de cette étape, les ions lithium de l'électrode positive migrent à travers le séparateur de l'électrode négative pour s'insérer de manière réversible dans la couche de conversion nanostructurée formée au cours de l'étape précédente.

La présente invention a par conséquent pour objet un procédé de fabrication d'un accumulateur lithium-ion à partir d'un précurseur d'accumulateur lithium-ion tel que décrit ci-dessus, ledit procédé comprenant

(i) une étape de réduction électrochimique du ou des précurseurs d'électrode négative par l'électrode de lithium, cette étape comprenant l'application d'un potentiel ou d'un courant entre l'électrode négative et l'électrode au lithium et entraînant la consommation partielle ou totale de l'électrode de lithium, jusqu'à ce que la couche superficielle d'oxyde du ou des précurseurs d'électrode négative ait été transformée partiellement ou totalement en une couche de conversion nanostructurée, et

(ii) une étape de réduction électrochimique du précurseur de l'électrode négative par l'électrode positive du précurseur d'accumulateur, cette étape comprenant le passage d'un courant de l'électrode positive vers l'électrode négative jusqu'à ce que l'électrode positive soit entièrement chargée,

ces deux étapes pouvant être effectuées dans cet ordre, mais également dans l'ordre inverse, c'est-à-dire l'étape de réduction du précurseur de l'électrode négative par l'électrode positive pouvant précéder celle de la réduction par l'électrode sacrificielle de lithium.

Au cours de l'étape (i), on connecte l'électrode de lithium métallique au précurseur d'électrode négative via leurs connecteurs (collecteurs d'électrons) respectifs et l'on applique un potentiel, généralement compris entre 0,5 et 1,5 V, de manière à induire une oxydation électrochimique de l'électrode de lithium, une réduction électrochimique de la couche d'oxyde du précurseur d'électrode négative, et une diffusion lente des ions lithium depuis l'électrode de lithium vers la couche d'oxyde du précurseur d'électrode négative.

Dans un mode de réalisation, cette étape (i) est poursuivie jusqu'à ce que l'électrode de lithium ait totalement disparu.

Dans un autre mode de réalisation, on met fin à l'étape (i) avant disparition complète de l'électrode de lithium, de manière à conserver une électrode de lithium résiduelle utile, en fin de vie de l'accumulateur, au recyclage du lithium.

Au cours de cette première étape, on applique de préférence un potentiel d'abord relativement important puis, de plus en plus faible. Cette réduction du potentiel appliqué se fait de préférence par paliers, c'est-à-dire on maintient la valeur du potentiel pendant un temps donné jusqu'à ce que l'intensité de courant devienne trop faible, puis on diminue la valeur du potentiel pour la maintenir de nouveau à cette nouvelle valeur jusqu'à ce que l'intensité de courant ait de nouveau atteint une valeur faible.

L'atteinte de cette valeur de courant faible correspond à l'atteinte d'un état où la concentration en ions lithium dans l'accumulateur est suffisamment homogène, c'est-à-dire où le gradient de concentration en ions lithium (nécessaire au passage du courant) dans l'accumulateur est faible. Cela signifie que les différents précurseurs d'électrode négative ont atteint le même niveau de potentiel par rapport à l'électrode de lithium sacrificielle. Le procédé par palier de potentiel décroissants successifs permet ainsi de laisser le temps aux ions lithium de diffuser à l'intérieur du précurseur d'accumulateur et donc jusqu'aux différents précurseurs d'électrodes négatives constituant ce précurseur d'accumulateur, et ce, à chaque palier de potentiel appliqué.

Lorsque l'électrode sacrificielle a totalement été consommée ou lorsqu'on a apporté au précurseur d'électrode négative une quantité d'ions lithium correspondant à la quantité d'ions lithium qui reste fixée dans la couche de conversion de l'électrode négative de façon définitive ou souhaitée, on connecte, via une source de courant ou de potentiel, la ou les électrodes textiles négatives aux collecteurs de courant de l'électrode positive et l'on effectue une première décharge de l'accumulateur par passage d'un courant jusqu'à ce que le potentiel de fin de décharge de l'accumulateur soit atteint.

La présente invention sera décrite plus en détail ci-après en référence aux figures, parmi lesquelles

la figure 1 représente un mode de réalisation d'un précurseur d'accumulateur de la présente invention et

les figures 2 et 3 représentent le même précurseur d'accumulateur respectivement au cours de la première et de la deuxième étape du procédé de fabrication d'un accumulateur de la présente invention.

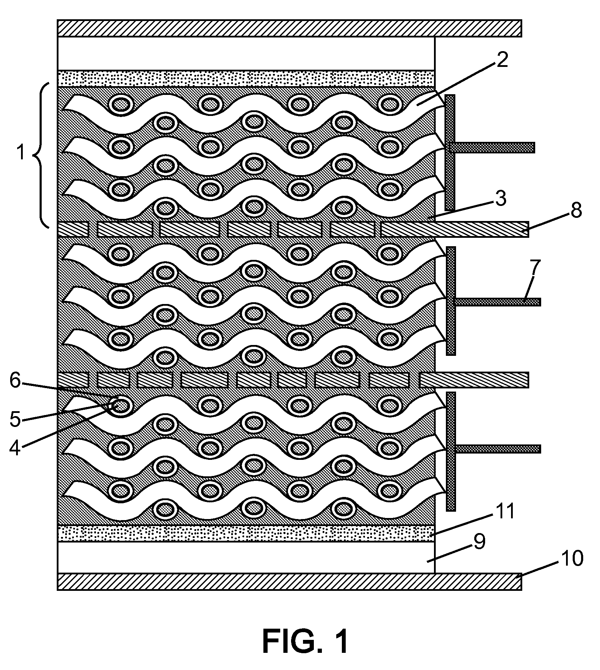

Le précurseur d'accumulateur représenté sur la Figure 1 comporte trois modules d'électrodes 1 comportant chacun trois précurseurs d'électrodes négatives 2 empilés les uns sur les autres. Les précurseurs d'électrodes négatives ont ici une structure textile tissée avec des fils de trame représentés en coupe transversale et des fils de chaîne en coupe longitudinale. Chaque fil de précurseur d'électrode négative comporte une partie centrale métallique 4, entourée d'une couche d'oxyde 5, ladite couche d'oxyde étant couverte à son tour par une mince couche de séparateur 6.

Les fils 2 des électrodes négatives sont enfermés dans une matrice solide continue formant l'électrode positive 3. Les précurseurs d'électrode négative 2 sont reliés à des connecteurs électriques 7 et l'électrode positive 3 est en contact électrique avec les connecteurs électriques 8. Les connecteurs électriques 8 de l'électrode positive sont des grilles en aluminium disposées en alternance avec les modules d'électrodes 1. Le matériau de l'électrode positive 3 entoure non seulement totalement les fils des précurseurs d'électrode négative 2 mais remplit également les vides des connecteurs électriques 8 de l'électrode positive établissant ainsi un réseau continu d'électrode positive s'étendant dans tout le volume de l'accumulateur. Le précurseur d'accumulateur représenté ici comprend deux électrodes sacrificielles formées chacune par un feuillard 9 en lithium métallique déposé sur un connecteur métallique 10. Le feuillard en lithium métallique est séparé de l'électrode positive 3 par une mince couche d'un séparateur 11.

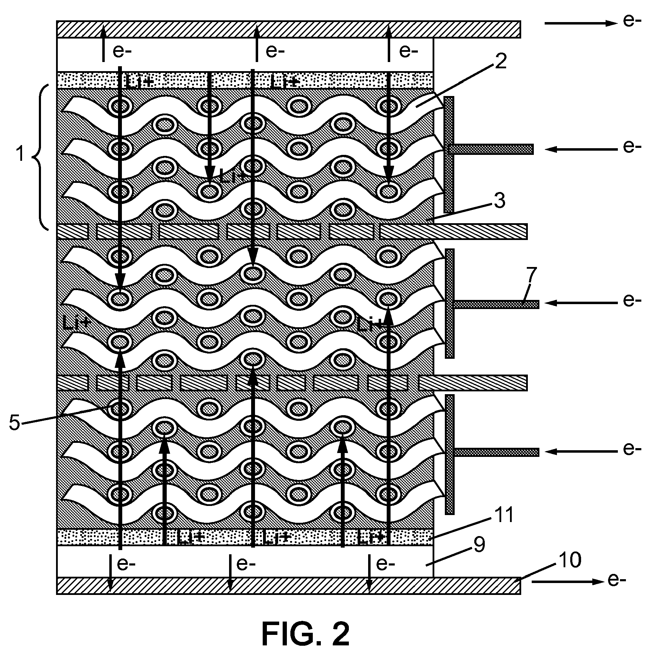

La figure 2 montre le processus électrochimique au cours de la première étape de conversion du précurseur d'accumulateur en accumulateur. L'application d'un potentiel entre les connecteurs 7 des précurseurs d'électrode négative 2 et les connecteurs 10 de l'électrode sacrificielle 9, provoque la migration des ions lithium depuis l'électrode sacrificielle 9 via l'électrode positive vers la couche d'oxyde 5 du précurseur d'électrode négative 2.

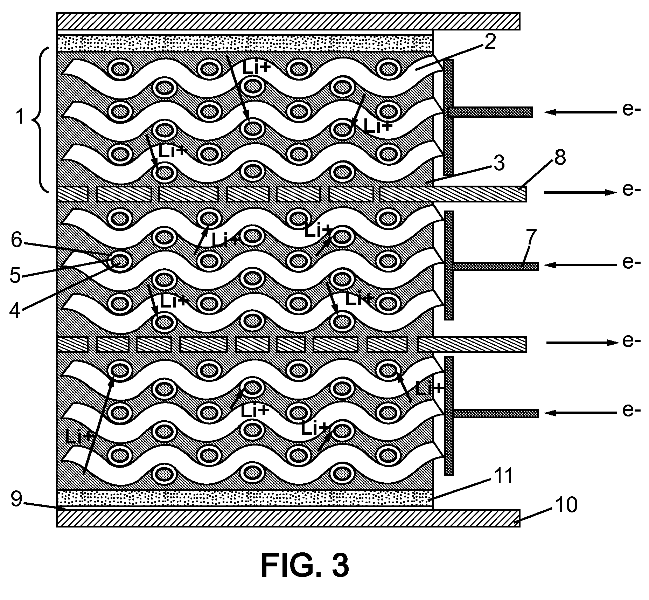

La figure 3 montre le processus électrochimique au cours de la deuxième étape du procédé de l'invention. L'électrode sacrificielle 9 a presque totalement disparu au cours de l'étape précédente représentée à la figure 2. Les connecteurs 7 des précurseurs d'électrode négative 2 ne sont plus reliés au connecteur 10 de l'électrode sacrificielle, mais aux connecteurs 8 de l'électrode positive 3 via une source de tension ou de courant. Les ions lithium de cette dernière migrent alors vers la couche d'oxyde 5 partiellement transformée, au cours de l'étape précédente, en couche de conversion nanostructurée.

## Revendications

**1.** Précurseur d'accumulateur lithium-ion comprenant

- un ou plusieurs modules d'électrodes (1) formés chacun par

(a) au moins un précurseur d'électrode négative textile (2), constitué d'une structure métallique textile (4), oxydée en surface (5), à base d'un ou de plusieurs métaux de transition des groupes 4 à 12 de la Classification Périodique des Eléments,
(b) un séparateur polymérique (6), imprégné d'une solution d'un sel de lithium dans un solvant organique aprotique, ledit séparateur recouvrant la totalité de la surface du précurseur d'électrode négative textile,
(c) une électrode positive (3) formant une matrice solide, de préférence continue, dans laquelle est enfermée la structure formée par (a) et (b), et

- au moins une électrode de lithium métallique, formée par un feuillard de lithium métallique (9) supporté par un conducteur électrique (10), séparée du ou des modules d'électrodes par un séparateur polymérique (11) imprégné d'une solution d'un sel de lithium dans un solvant organique aprotique, **caractérisé par le fait que** le rapport de la surface géométrique cumulée du ou des feuillards de lithium à la surface géométrique cumulée de l'ensemble des précurseurs d'électrodes négatives textiles est compris dans la fourchette allant de 0,05 à 0,33, de préférence de 0,1 à 0,25.

**2.** Précurseur d'accumulateur selon la revendication 1, **caractérisé par le fait que** la structure textile métallique oxydée en surface est une structure non tissée, formée de fibres courtes ayant de préférence une longueur moyenne comprise entre 1 cm et 50 cm, de préférence entre 2 cm et 20 cm, et un diamètre équivalent compris entre 5 $\mu$m et 50 $\mu$m.

**3.** Précurseur d'accumulateur selon la revendication 1 ou 2, **caractérisé par le fait que** la structure métallique textile est en acier non allié ou faiblement allié.

**4.** Précurseur d'accumulateur selon l'une quelconque des revendications précédentes, **caractérisé par le fait que** plusieurs modules d'électrodes de forme plane et de dimensions identiques sont superposés parallèlement les uns aux autres.

**5.** Précurseur d'accumulateur selon l'une quelconque des revendications précédentes, **caractérisé par le fait que** le plan du feuillard de lithium de l'électrode au lithium est parallèle au plan du ou des modules d'électrodes.

**6.** Précurseur d'accumulateur selon l'une quelconque des revendications précédentes, **caractérisé par le fait qu'**il comprend en outre un collecteur d'électrons (8), en contact électrique avec l'électrode positive (c) de chacun des modules d'électrodes, ledit collecteur d'électrons étant formé de préférence par une ou plusieurs grilles en aluminium disposées parallèlement au plan du ou des modules d'électrodes et intercalées entre ceux-ci.

**7.** Procédé de fabrication d'un accumulateur lithium-ion à partir d'un précurseur d'accumulateur lithium-ion selon l'une quelconque des revendications précédentes, comprenant

(i) une étape de réduction électrochimique du ou des précurseurs d'électrode négative par l'électrode de lithium métallique sacrificielle, cette étape comprenant l'application d'un potentiel ou d'un courant entre l'électrode négative et l'électrode au lithium et entraînant la consommation partielle ou totale de l'électrode de lithium métallique sacrificielle, jusqu'à ce que la couche superficielle d'oxyde des précurseurs d'électrode négative ait été transformée partiellement ou totalement en une couche de conversion nanostructurée,
(ii) une étape de réduction électrochimique du ou des précurseurs d'électrode négative par l'électrode positive du précurseur d'accumulateur, cette étape comprenant le passage d'un courant de l'électrode positive vers l'électrode négative jusqu'à ce que l'électrode positive soit entièrement chargée,

ces deux étapes pouvant être effectuées dans cet ordre ou dans l'ordre inverse.

**8.** Procédé selon la revendication 7, **caractérisé par le fait que** l'étape (i) est poursuivie jusqu'à disparition complète de l'électrode de lithium métallique sacrificielle

**9.** Procédé selon la revendication 7, **caractérisé par le fait que** l'on arrête l'étape (i) avant disparition complète de l'électrode de lithium métallique sacrificielle.

**10.** Procédé de fabrication selon l'une des revendications 7 à 9, **caractérisé par le fait que** l'on applique, au cours de l'étape (i), un potentiel de plus en plus faible, la réduction du potentiel appliqué se faisant de préférence par paliers.

**Patentansprüche**

**1.** Lithiumionenbatterievorläufer, umfassend:

- ein oder mehrere Elektrodenmodule (1), die jeweils gebildet sind von

(a) mindestens einem negativen textilen Elektrodenvorläufer (2), der aus einer metallischen textilen Struktur (4), die an der Oberfläche (5) oxidiert ist, auf Basis eines oder mehrerer Übergangsmetalle der Gruppen 4 bis 12 des Periodensystems der Elemente gebildet ist,
(b) einem Polymerseparator (6), der mit einer Lösung aus einem Lithiumsalz in einem aprotischen organischen Lösungsmittel imprägniert ist, wobei der Separator die Gesamtheit der Oberfläche des negativen textilen Elektrodenvorläufers bedeckt,
(c) einer positiven Elektrode (3), die eine solide, vorzugsweise kontinuierliche, Matrix bildet, in der die von (a) und (b) gebildete Struktur eingeschlossen ist, und

- mindestens eine metallische Lithiumelektrode, die von einem metallischen Lithiumband (9), das von einem elektrischen Leiter (10) getragen wird, gebildet ist, die von dem Elektrodenmodul oder den Elektrodenmodulen durch einen Polymerseparator (11), der mit einer Lösung aus einem Lithiumsalz in einem aprotischen organischen Lösungsmittel imprägniert ist, getrennt ist, **dadurch gekennzeichnet, dass** das Verhältnis der kumulierten geometrischen Fläche des Lithiumbandes oder der Lithiumbänder zur kumulierten geometrischen Fläche der Gesamtheit der negativen textilen Elektrodenvorläufer in dem Bereich von 0,05 bis 0,33, vorzugsweise von 0,1 bis 0,25 liegt.

2. Batterievorläufer nach Anspruch 1, **dadurch gekennzeichnet, dass** die an der Oberfläche oxidierte metallische textile Struktur eine Vliesstruktur ist, die aus kurzen Fasern gebildet ist, die vorzugsweise eine durchschnittliche Länge zwischen 1 cm und 50 cm, vorzugsweise zwischen 2 cm und 20 cm und einen äquivalenten Durchmesser zwischen 5 $\mu$m und 50 $\mu$m haben.

3. Batterievorläufer nach Anspruch 1 oder 2, **dadurch gekennzeichnet, dass** die metallische textile Struktur aus nicht legiertem oder gering legiertem Stahl ist.

4. Batterievorläufer nach einem der vorhergehenden Ansprüche, **dadurch gekennzeichnet, dass** mehrere Elektrodenmodule von flacher Form und mit identischen Abmessungen parallel übereinander angeordnet sind.

5. Batterievorläufer nach einem der vorhergehenden Ansprüche, **dadurch gekennzeichnet, dass** die Ebene des Lithiumbandes der Lithiumelektrode parallel zur Ebene des Elektrodenmoduls oder der Elektrodenmodule ist.

6. Batterievorläufer nach einem der vorhergehenden Ansprüche, **dadurch gekennzeichnet, dass** er ferner einen Elektronenkollektor (8) umfasst, der in elektrischem Kontakt mit der positiven Elektrode (c) jedes der Elektrodenmodule ist, wobei der Elektronenkollektor vorzugsweise von einem oder mehreren Gittern aus Aluminium gebildet ist, die parallel zur Ebene des Elektrodenmoduls oder der Elektrodenmodule angeordnet und zwischen diesen befestigt sind.

7. Verfahren zur Herstellung einer Lithiumionenbatterie aus einem Lithiumionenbatterievorläufer nach einem der vorhergehenden Ansprüche, umfassend:

(i) einen Schritt der elektrochemischen Reduktion des Vorläufers oder der Vorläufer einer negativen Elektrode durch die metallische Opferlithiumelektrode, wobei dieser Schritt das Anlegen eines Potentials oder eines Stroms zwischen der negativen Elektrode und der Lithiumelektrode umfasst und zum teilweisen oder vollständigen Verbrauch der metallischen Opferlithiumelektrode führt, bis die oberflächliche Oxidschicht der Vorläufer einer negativen Elektrode teilweise oder vollständig in eine nanostrukturierte Wandlerschicht umgeformt wurde,
(ii) einen Schritt der elektrochemischen Reduktion des Vorläufers oder der Vorläufer einer negativen Elektrode durch die positive Elektrode des Batterievorläufers, wobei dieser Schritt den Übergang eines Stroms von der positiven Elektrode zu der negativen Elektrode umfasst, bis die positive Elektrode vollständig geladen ist,

wobei diese beiden Schritte in dieser Reihenfolge oder in umgekehrter Reihenfolge durchgeführt werden können.

8. Verfahren nach Anspruch 7, **dadurch gekennzeichnet, dass** der Schritt (i) fortgesetzt wird, bis die metallische Opferlithiumelektrode vollständig verschwunden ist.

9. Verfahren nach Anspruch 7, **dadurch gekennzeichnet, dass** der Schritt (i) vor dem vollständigen Verschwinden der metallischen Opferlithiumelektrode angehalten wird.

10. Herstellungsverfahren nach einem der Ansprüche 7 bis 9, **dadurch gekennzeichnet, dass** während des Schrittes (i) ein immer geringeres Potential angelegt wird, wobei die Reduktion des angelegten Potentials vorzugsweise stufenweise erfolgt.

**Claims**

1. Lithium-ion battery precursor comprising

- one or more electrode modules (1) each formed by

(a) at least one textile negative electrode precursor (2), consisting of a metal textile structure (4), oxidised at the surface (5), containing one or more transition metals from groups 4 to 12 of the periodic table of elements,

(b) a polymer separator (6), impregnated with a solution of a lithium salt in an aprotic organic solvent, said separator covering the entire surface of the textile negative electrode precursor,

(c) a positive electrode (3) forming a solid matrix, which is preferably continuous, in which is enclosed the structure formed by (a) and (b), and

- at least one metal lithium electrode, formed by a metal lithium strip (9) supported by an electrical conductor (10), separated from the electrode module or modules by a polymer separator (11) impregnated with a solution of a lithium salt in an aprotic organic solvent, **characterised by** the fact that the ratio of the total geometric surface of the lithium strip or strips to the total geometric surface of all the textile negative electrode precursors is comprised between 0.05 and 0.33, preferably between 0.1 and 0.25.

2. Battery precursor according to claim 1, **characterised by** the fact that the metal textile structure oxidised at the surface is a non-woven structure, formed of short fibres having preferably an average length comprised between 1 cm and 50 cm, and preferably between 2 cm and 20 cm, and an equivalent diameter between 5 $\mu$m and 50 $\mu$m.

3. Battery precursor according to claim 1 or 2, **characterised by** the fact that the metal textile structure in unalloyed or low-alloyed steel.

4. Battery precursor as claimed in any preceding claim, **characterised by** the fact that several electrode modules with a planar shape and identical dimensions are superposed parallel to one another.

5. Battery precursor as claimed in any preceding claim, **characterised by** the fact that the plane of the lithium strip of the lithium electrode is parallel to the plane of the electrode module or modules.

6. Battery precursor as claimed in any preceding claim, **characterised by** the fact that it further comprises an electron collector (8), in electrical contact with the positive electrode (c) of each one of the electrode modules, said electron collector being formed preferably by one or several aluminium grids arranged parallel to the plane of the electrode module or modules and inserted between the latter.

7. Method for manufacturing a lithium-ion battery from a lithium-ion battery precursor as claimed in any preceding claim, comprising

(i) a step of electrochemical reduction of the negative electrode precursor or precursors by the sacrificial metal lithium electrode, said step comprising the application of a potential or of a current between the negative electrode and the lithium electrode and resulting in the partial or total consumption of the sacrificial metal lithium electrode, until the oxide surface layer of the negative electrode precursors has been partially or totally transformed into a nanostructured conversion layer,

(ii) a step of electrochemical reduction of the negative electrode precursor or precursors by the positive electrode of the battery precursor, said step comprising the passage of a current of the positive electrode to the negative electrode until the positive electrode is entirely charged,

these two steps may be carried out in this order or in the inverse order.

8. Method according to claim 7, **characterised by** the fact that the step (i) is continued until the complete disappearance of the sacrificial metal lithium electrode

9. Method according to claim 7, **characterised by** the fact that the step (i) is stopped before the complete disappearance of the sacrificial metal lithium electrode.

10. Manufacturing method according to one of claims 7 to 9, **characterised by** the fact that, during the step (i), an increasingly lower potential is applied, with the reduction of the potential applied being carried out more preferably in stages.

FIG. 1

**FIG. 2**

**FIG. 3**

**EP 2 695 226 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2870639
- FR 2901641
- US 5871863 A